# EUROPÄISCHE PATENTSCHRIFT

(11) **EP 2 942 214 B1**
(45) Veröffentlichungstag und Bekanntmachung des Hinweises auf die Patenterteilung: **21.06.2023**
(21) Anmeldenummer: 15163033.2
(22) Anmeldetag: 09.04.2015
(51) Int. Cl.: B60D 5/00, B61D 17/22

(54) **ÜBERGANGSSCHUTZ FÜR GELENKIG MITEINANDER VERBUNDENE SCHIENENFAHRZEUG-WAGENKÄSTEN**
PROTECTION FOR THE TRANSITION BETWEEN RAIL VEHICLE WAGONS CONNECTED WITH AN ARTICULATED CONNECTION
PROTECTION DE PASSAGE POUR VÉHICULE DOTÉ DE PLUSIEURS CAISSES RELIÉES DE MANIÈRE ARTICULÉE

(30) Priorität: 09.04.2014 DE 202014003031 U
(43) Veröffentlichungstag der Anmeldung: 11.11.2015
(73) Patentinhaber: Bombardier Transportation GmbH, 10785 Berlin (DE)
(72) Erfinder: Zakovsek, Harald, 1230 Wien (AT)
(74) Vertreter: Patentanwälte Bressel und Partner mbB

(56) Entgegenhaltungen:
- EP-A1- 2 159 084
- DE-A1- 10 204 703
- DE-U1-202013 000 165
- US-A- 903 893

## Beschreibung

Die Erfindung betrifft einen Übergangsschutz für gelenkig miteinander verbundene Schienenfahrzeug-Wagenkästen, ein Verfahren zu dessen Herstellung und eine Schienenfahrzeug-Wagenkastenanordnung mit einem solchen Übergangsschutz.

Derartige Schutzanordnungen sind zum Beispiel aus DE 3804323 A1 als Doppelwellenbälge mit einem inneren Wellenbalg (innere Hülle des Übergangs) und einem äußeren Wellenbalg (äußere Hülle des Übergangs) bekannt. Sie führen zu einer guten Isolation des Übergangs gegen Schall, Wärmeeinwirkung oder Wärmeverlust und Druckwellen. Sie verfügen außerdem über eine gute Eigenstabilität, ohne die erforderlichen Relativbewegungen zwischen zwei gelenkig miteinander verbundenen Schienenfahrzeug-Wagenkästen erheblich zu behindern. In DE 3804323 A1 wird als Material der Bälge Gummi oder gummibeschichtetes Gewebe genannt.

Außer Wellenbälgen sind auch andere Bauformen bekannt, insbesondere Faltenbälge, die ebenfalls für den Übergangsschutz der Erfindung eingesetzt werden können.

Aus DE 19821083 A1 ist es bekannt, dass ein Balg mehrere untereinander verbundene Balgelemente aufweisen kann.

Aus EP 2404748 A1 ist es bekannt, dass Bälge einzelne Falten oder Wellen haben, die sich aus Materialbahnen zusammensetzen, wobei im Übergang von einer jeden Falte oder Welle zu einer benachbarten Falte oder Welle die einzelnen Materialbahnen zur Bildung des Falten- oder Wellenbalges miteinander, insbesondere auch durch Balgrahmen, in Verbindung stehen. Die Materialbahn eines solchen Balges umfasst mindestens einen Festigkeitsträger, beispielsweise in Form eines Gewebes, eines Gewirkes, Geleges oder Gestricks, wobei dieser Festigkeitsträger üblicherweise zu beiden Seiten beschichtet ist. Eine der Beschichtungen besteht aus vulkanisiertem Silikonkautschuk, der flammhemmend ist.

Für den Übergangsschutz mit einem doppelten Balg wird in EP 2404748 A1 vorgeschlagen, die Bälge aus denselben Materialien herzustellen, jedoch die Beschichtung aus Silikonkautschuk auf der inneren Hülle außen aufzubringen und auf der äußeren Hülle innen aufzubringen, so dass die Beschichtungen aus Silikonkautschuk einander zuweisend angeordnet sind.

EP 2 159 084 A1 beschreibt einen Übergang zwischen zwei gelenkig miteinander verbundenen Fahrzeugen mit einem äußeren Balg und einem beabstandet dazu angeordneten inneren Balg. Um in dem Übergang für eine Helligkeit zu sorgen, die der im übrigen Fahrzeug entspricht, schlägt D1 vor, dass der innere Balg zumindest partiell ein lichtdurchlässiges Material aufweist, wobei hinter dem inneren Balg ein Leuchtmittel angeordnet ist. Als eine Ausgestaltung wird dort vorgeschlagen, dass der innere Balg ein Band aus lichtdurchlässigem Material aufweist. Für dieses Band ist die Verwendung von Silikonkautschuk als Material als solches zur Herstellung des lichtdurchlässigen Bandes oder in Verbindung mit einem Gewebe als lichtdurchlässige Silikonkautschuk-Beschichtung denkbar.

Es ist eine Aufgabe der Erfindung, einen Übergangsschutz für gelenkig miteinander verbundene Schienenfahrzeug-Wagenkästen anzugeben, wobei der Übergangsschutz einen doppelten Balg aufweist, der eine innere und eine äußere Hülle für den Übergang bildet, und wobei bei geringem Herstellungsaufwand und hoher Lebensdauer ein verbesserter Brandschutz erreicht werden soll.

Die beigefügten Patentansprüche definieren den Schutzumfang.

Gemäß einem Grundgedanken der Erfindung wird für die innere Hülle des doppelten Balges ein Silikonmaterial verwendet, das sich von dem Material oder den Materialien der äußeren Hülle unterscheidet. Insbesondere unterscheidet es sich hinsichtlich der Art des Materials (in der äußeren Hülle ist überhaupt kein Silikonmaterial vorhanden) und/oder hinsichtlich der Funktion des Materials (die äußere Hülle weist lediglich eine Beschichtung aus Silikonkautschuk auf, während zum Beispiel zumindest der tragende Teil der inneren Hülle aus dem Silikonmaterial besteht).

Obwohl EP 2404748 A1 bereits auf die Flammenfestigkeit des Silikonwerkstoffs hinweist, kann, insbesondere wenn der tragende Teil der inneren Hülle aus dem Silikonmaterial besteht, der Brandschutz erhöht werden. Dabei ist es nicht erforderlich, dass die äußere Hülle denselben hohen Brandschutz-Anforderungen entspricht, wie die innere Hülle. Wenn daher das Silikonmaterial überwiegend oder ausschließlich für die innere Hülle verwendet wird, kann daher verhältnismäßig hoher Herstellungsaufwand für die Verarbeitung von Silikon als Bestandteil der äußeren Hülle vermieden werden und dennoch ein hoher Brandschutz erzielt werden. Die Erfindung geht dabei davon aus, dass der Brandschutz im Übergang zwischen den Wagenkästen und damit im Bereich der inneren Hülle besonders hoch sein sollte, da sich dort Passagiere befinden können.

Außerdem ist Silikon empfindlicher gegen ultraviolette Strahlung und andere äußere Einflüsse als andere, für die Herstellung von Bälgen bekannte Stoffe. Obwohl der Brandschutz erhöht ist, wird daher Herstellungsaufwand gespart und ist die Lebensdauer des Übergangsschutzes erhöht. Ein weiterer Vorteil besteht in der Gewichtsreduktion im Vergleich zu der Verwendung von Silikonmaterial auch für die äußere Hülle, da Silikonmaterial eine größere Dichte aufweist als die meisten anderen, für die Herstellung von Bälgen bekannten Materialien.

Unter einem Silikonmaterial wird ein Material verstanden, dessen Hauptbestandteil Silikon ist. Neben Silikon können die üblichen Hilfsstoffe, Farbstoffe und anderen Zuschlagsstoffe in dem Material vorhanden sein, die zum Beispiel die Vulkanisation ermöglichen, dem Material seine Farbe geben, seine Belastbarkeit oder Haltbarkeit erhöhen (z. B. bei Faserbestandteilen) und/oder seine Elastizität oder Weichheit verbessern. Unter einem Silikonmaterial wird jedoch kein Material verstanden, dass makroskopische Materialbereiche ohne Silikon aufweist. Zum Beispiel bei einem Gewebe ohne Silikon, das mit Silikonkautschuk beschichtet ist, wird lediglich die Silikonkautschukschicht als Silikonmaterial verstanden. Insbesondere ist das Silikonmaterial ein Silikonkautschuk.

Insbesondere wird vorgeschlagen: Ein Übergangsschutz für gelenkig miteinander verbundene Schienenfahrzeug-Wagenkästen, aufweisend einen doppelten Balg, der eine innere und eine äußere Hülle für den Übergang bildet, wobei die äußere Hülle aus zumindest einem ersten Material gebildet ist. Die innere Hülle ist unter Verwendung eines zweiten Materials gebildet, das sich von dem ersten Material oder von den ersten Materialien unterscheidet, und das zweite Material ist ein Silikonmaterial.

Demnach kann die äußere Hülle aus einem oder mehreren Materialien gebildet sein und ist keines dieser ersten Materialien gleich dem Silikonmaterial der inneren Hülle. Es ist jedoch nicht ausgeschlossen, dass die innere Hülle außer dem Silikonmaterial noch ein weiteres Material oder weitere Materialien aufweist.

Es wird bevorzugt, dass die innere Hülle eine Materialschicht, optional aus Materialschicht-Abschnitten miteinander verbundener Balgelemente, aufweist, die aus dem Silikonmaterial besteht und sich in Längsrichtung der Verbindung der Wagenkästen durchgehend über die Länge der inneren Hülle erstreckt.

Die Balgelemente können zum Beispiel die oben erwähnten Falten oder Wellen der Bälge sein. In diesem Fall weist jede Falte oder Welle eine Materialschicht aus Silikonmaterial auf. Der Begriff Materialschicht bedeutet nicht, dass es zwingend weitere Schichten geben muss. Indem sich die Materialschicht durchgehend über die Länge (d.h. in Längsrichtung des Schienenfahrzeugs zwischen den Wagenkästen, die der Balg miteinander verbindet) der inneren Hülle erstreckt, wird über die gesamte Länge des Balges eine hohe Festigkeit mit den Vorteilen von Silikon erzielt. Dies ist eine Ausgestaltung eines inneren Balges, dessen tragender Teil aus Silikonmaterial besteht oder der insgesamt aus Silikonmaterial besteht.

Vorzugsweise weist die innere Hülle ein die Gewichtskräfte der inneren Hülle ableitendes, tragendes Material auf, das bei der Ausführung der mechanischen Funktion der inneren Hülle als Balg verformt wird und dadurch die Längenänderung des Balges zwischen den verbundenen Wagenkästen ermöglicht, wobei das tragende Material ein Silikonmaterial ist. Die mechanische Funktion des Balges besteht in der Möglichkeit zur Längenänderung zwischen den Wagenkasten, insbesondere bei Kurvenfahrten des Schienenfahrzeugs. Dies ist eine weitere Ausgestaltung eines inneren Balges, dessen tragender Teil aus Silikonmaterial besteht oder der insgesamt aus Silikonmaterial besteht.

Insbesondere bestehen alle gummielastischen Teile der inneren Hülle aus dem Silikonmaterial. Neben gummielastischen Teilen kann die innere Hülle zum Beispiel noch die oben erwähnten Balgrahmen aufweisen. Nicht nur in diesem Fall, sondern auch in anderen Fällen, in denen zumindest die wesentlichen tragenden Teile der inneren Hülle aus dem Silikonmaterial bestehen, ist ein besonders hoher Brandschutz erreicht.

Das Silikonmaterial ist insbesondere ein Polymermaterial ohne in der Fertigung beabsichtigte Hohlräume, d.h. es ist nicht beabsichtigt, dass das Silikonmaterial Hohlräume enthält, wie es im Gegensatz dazu zum Beispiel bei einem Gewebe aus Silikonfasern oder einem Silikonschaum der Fall ist. Gegenüber einem Gewebe besteht der Vorteil, dass das Material nicht für Rauchgase durchlässig ist. Ein Silikonschaum ist nicht als tragender Teil oder insgesamt als innere Hülle geeignet, da bei elastischer Beanspruchung mit Materialermüdung zu rechnen ist und die Festigkeit nicht ausreicht.

Insbesondere hat die innere Hülle die Form eines Wellenbalges. Alternativ hat sie zum Beispiel die Form eines Faltenbalges. Entsprechendes kann für die äußere Hülle gelten.

Zum Umfang der Erfindung gehört außerdem eine Schienenfahrzeug-Wagenkastenanordnung mit dem Übergangsschutz in einer der Ausgestaltungen, die in dieser Beschreibung beschrieben werden. In der Anordnung besteht ein Übergang zwischen den miteinander gelenkig verbundenen Wagenkästen und der Übergang wird von dem Übergangsschutz geschützt. Insbesondere endet dabei die innere Hülle an ihrem unteren Ende an einem Zwischenboden im Übergang zwischen den gelenkig miteinander verbundenen Schienenfahrzeug-Wagenkästen.

Ferner kann sich unterhalb des Zwischenbodens zumindest ein Teil des Gelenks befinden, durch das die Schienenfahrzeug-Wagenkästen gelenkig miteinander verbunden sind.

Außerdem gehört zum Umfang der Erfindung ein Schienenfahrzeug mit dem Schienenfahrzeug-Wagenkasten in einer der Ausgestaltungen, die in dieser Beschreibung beschrieben werden.

Ein Ausführungsbeispiel der Erfindung wird nun unter Bezugnahme auf die beigefügte Zeichnung beschrieben. In der Zeichnung zeigt:

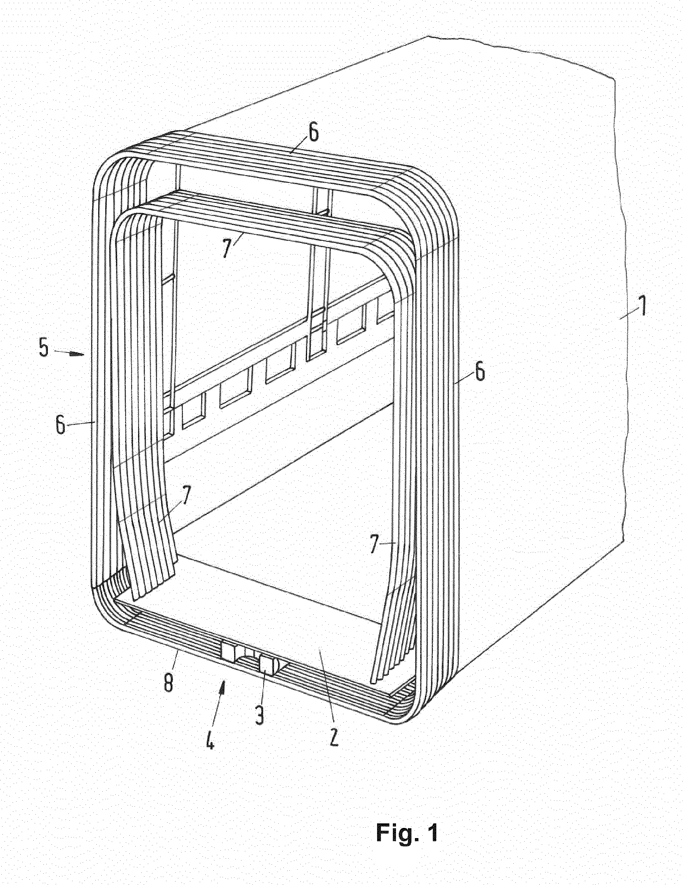

- Fig. 1: eine perspektivische Darstellung eines Schienenfahrzeugs-Wagenkastens mit einem Übergang 4, der zu einem im Vordergrund liegenden, nicht dargestellten weiteren Wagenkasten führt.

In Fig. 1 ist der Rohbau eines Schienenfahrzeugs-Wagenkastens 1 dargestellt, wobei insbesondere weitere, nicht dargestellte Teile des Rohbaus im Inneren des Wagenkastens 1 vorhanden sein können. Im Bildvordergrund erkennt man einen Zwischenboden 2 innerhalb des Übergangs 4, wobei unterhalb des Zwischenbodens zwei Teile eines Gelenks 3 dargestellt sind, über das der Wagenkasten 1 gelenkig mit einem weiteren Wagenkasten verbunden werden kann.

Der Übergang 4 ist durch einen Übergangsschutz 5 geschützt, so dass Personen durch den Übergang 4 hindurch in den Wagenkasten 1 gelangen können oder ihn verlassen können. Der Übergangschutz 5 weist eine äußere Hülle 6 (äußerer Balg) und eine innere Hülle 7 (innerer Balg) auf. Die innere Hülle 7 endet unten auf dem Zwischenboden, während die äußere Hülle 6 in die untere äußere Hülle 8 im Übergang 4 übergeht. Diese untere äußere Hülle 8 befindet sich unterhalb des Zwischenbodens 2.

Die äußere Hülle 6 kann insbesondere in einer Weise gefertigt werden, wie es bereits bekannt ist. Zum Beispiel kann sie ein Wellenbalg sein, dessen Wellen jeweils aus einer Materialbahn bestehen, welche eine Trägerschicht mit beidseitiger äußerer Polymerbeschichtung hat.

Die innere Hülle 7 ist unter Verwendung eines Silikonmaterials gefertigt, zum Beispiel ebenfalls als Wellenbalg. Vorzugsweise bestehen sämtliche elastomeren Materialien der inneren Hülle aus Silikonmaterial, zum Beispiel aus einem Silikonpolymer ohne beabsichtigte Hohlräume.

Auf diese Weise bildet die innere Hülle 7 einen Brandschutz hoher Güte für den Übergang zwischen den Wagenkästen. Außerdem ist die innere Hülle 7 vor äußeren Einflüssen geschützt. Die äußere Hülle 6 muss dabei nicht aus Silikonmaterial hergestellt werden, so dass der Herstellungsaufwand reduziert ist.

## Patentansprüche

1. Übergangsschutz (5) für gelenkig miteinander verbundene Schienenfahrzeug-Wagenkästen (1), aufweisend einen doppelten Balg (6, 7), der eine innere (7) und eine äußere (6) Hülle für den Übergang (4) bildet, wobei die äußere Hülle (6) aus zumindest einem ersten Material gebildet ist,
wobei die innere Hülle (7) unter Verwendung eines zweiten Materials gebildet ist, das sich von dem ersten Material oder von den ersten Materialien unterscheidet, und das zweite Material ein Silikonmaterial ist,
**dadurch gekennzeichnet, dass**
die innere Hülle (7) überwiegend oder ausschließlich aus dem Silikonmaterial besteht.

2. Übergangsschutz nach Anspruch 1, wobei die innere Hülle (7) eine Materialschicht, optional aus Materialschicht-Abschnitten miteinander verbundener Balgelemente, aufweist, die aus dem Silikonmaterial besteht und sich in Längsrichtung der Verbindung der Wagenkästen (1) durchgehend über die Länge der inneren Hülle (7) erstreckt.

3. Übergangsschutz nach Anspruch 1 oder 2, wobei alle gummielastischen Teile der inneren Hülle (7) aus dem Silikonmaterial bestehen.

4. Übergangsschutz nach einem der Ansprüche 1-3, wobei das Silikonmaterial ein Polymermaterial ohne in der Fertigung beabsichtigte Hohlräume ist.

5. Übergangsschutz nach einem der Ansprüche 1-4, wobei die innere Hülle (7) die Form eines Wellenbalges hat.

6. Schienenfahrzeug-Wagenkastenanordnung mit dem Übergangsschutz (5) nach einem der Ansprüche 1-5, wobei die innere Hülle (7) an ihrem unteren Ende an einem Zwischenboden (2) im Übergang (4) zwischen den gelenkig miteinander verbundenen Schienenfahrzeug-Wagenkästen (1) endet.

7. Schienenfahrzeug-Wagenkastenanordnung nach Anspruch 6, wobei sich unterhalb des Zwischenbodens (2) zumindest ein Teil des Gelenks (3) befindet, durch das die Schienenfahrzeug-Wagenkästen (1) gelenkig miteinander verbunden sind.

8. Schienenfahrzeug mit der Schienenfahrzeug-Wagenkasten Anordnung nach Anspruch 6 oder 7.

9. Verfahren zum Herstellen eines Übergangsschutzes (5) für gelenkig miteinander verbundene Schienenfahrzeug-Wagenkästen (1), wobei ein doppelter Balg (6, 7) des Übergangsschutzes durch eine innere (7) und eine äußere (6) Hülle für den Übergang (4) gebildet wird, wobei die äußere Hülle (6) aus zumindest einem ersten Material gebildet wird,
wobei die innere Hülle (7) unter Verwendung eines zweiten Materials gebildet wird, das sich von dem ersten Material oder von den ersten Materialien unterscheidet, und das zweite Material ein Silikonmaterial ist,
**dadurch gekennzeichnet, dass**
die innere Hülle (7) überwiegend oder ausschließlich aus dem Silikonmaterial gebildet wird.

## Claims

1. Transition protection (5) for rail-vehicle bodies (1) that are connected to one another in an articulated manner, comprising a double bellows (6, 7), which forms an inner sheath (7) and an outer sheath (6) for the transition (4), the outer sheath (6) being made of at least one first material, the inner sheath (7) being formed using a second material that is different from the first material or from the first materials, and the second material being a silicone material, **characterized in that**
the inner sheath (7) predominantly or exclusively consists of the silicone material.

2. Transition protection according to claim 1, wherein the inner sheath (7) comprises a material layer, optionally made of material-layer portions of interconnected bellows elements, which consists of the silicone material and extends in longitudinal direction of the connection of the bodies (1) throughout the length of the inner sheath (7).

3. Transition protection according to claim 1 or 2, wherein all rubber-elastic parts of the inner sheath (7) consist of the silicone material.

4. Transition protection according to any one of claims 1-3, wherein the silicone material is a polymer material without cavities intentionally made during manufacturing.

5. Transition protection according to any one of claims 1-4, wherein the inner sheath (7) is in the shape of corrugated bellows.

6. Rail-vehicle body assembly comprising the transition protection (5) according to any one of claims 1-5, wherein the inner sheath (7) ends at its lower end at an intermediate floor (2) at the transition (4) between the rail-vehicle bodies (1) that are connected to one another in an articulated manner.

7. Rail-vehicle body assembly according to claim 6, wherein at least one part of the joint (3) by means of which the rail-vehicle bodies (1) are connected to one another in an articulated manner is located under the intermediate floor (2).

8. Rail vehicle comprising the rail-vehicle body assembly according to claim 6 or 7.

9. Method for producing transition protection (5) for rail-vehicle bodies (1) that are connected to one another in an articulated manner, a double bellows (6, 7) of the transition protection being formed by an inner sheath (7) and an outer sheath (6) for the transition (4), the outer sheath (6) being made of at least one first material, the inner sheath (7) being formed using a second material that is different from the first material or from the first materials, and the second material being a silicone material,
**characterized in that**
the inner sheath (7) is predominantly or exclusively made of the silicone material.

## Revendications

1. Protection de passage (5) pour véhicule doté de plusieurs caisses reliées de manière articulée (1), présentant un double soufflet (6, 7) qui constitue une gaine interne (7) et une gaine externe (6) pour le passage (4), la gaine externe (6) étant constituée d'au moins un premier matériau,
la gaine interne (7) étant constituée en utilisant un second matériau différent du premier matériau ou des premiers matériaux, et le second matériau étant un matériau silicone,
**caractérisé en ce que**
la gaine interne (7) est constituée principalement ou exclusivement du matériau silicone.

2. Protection de passage selon la revendication 1, dans laquelle la gaine interne (7) présente une couche de matériau, facultativement des éléments de soufflet liés entre eux constitués de sections de matériau, qui se compose du matériau silicone et qui s'étend suivant la longueur de la liaison des caisses (1) sans interruption sur la longueur de la gaine interne (7).

3. Protection de passage selon la revendication 1 ou 2, dans laquelle toutes les pièces élastiques de la gaine interne (7) sont en matériau silicone.

4. Protection de passage selon l'une des revendications 1 à 3, dans laquelle le matériau silicone est un matériau polymère sans espaces vides prévus au cours de sa préparation.

5. Protection de passage selon l'une des revendications 1 à 4, dans laquelle la gaine interne (7) a la forme d'un soufflet.

6. Dispositif de carrosserie de véhicule ferroviaire avec la protection de passage (5) selon l'une des revendications 1 à 5, dans lequel la gaine interne (7) se termine à son extrémité inférieure au niveau d'un faux plancher (2) dans le passage (4) entre les caisses de véhicule ferroviaire (1) liées entre elle de façon articulée.

7. Dispositif de carrosserie de véhicule ferroviaire selon la revendication 6, dans lequel sous le faux plancher (2) se trouve au moins une partie de l'articulation (3) par laquelle les caisses de véhicule ferroviaire (1) sont liées entre elles de façon articulée.

8. Véhicule ferroviaire avec le dispositif de carrosserie de véhicule ferroviaire selon la revendication 6 ou 7.

9. Procédé de fabrication d'une protection de passage (5) pour carrosseries reliées entre elles de manière articulée (1), dans lesquelles un double soufflet (6, 7) de la protection de passage est constitué d'une gaine interne (7) et d'une gaine externe (6) pour le passage (4), la gaine externe (6) étant constituée d'au moins un premier matériau,
la gaine interne (7) étant constituée en utilisant un second matériau différent du premier matériau ou des premiers matériaux, et le second matériau étant un matériau silicone,
**caractérisé en ce que**
la gaine interne (7) est constituée principalement ou exclusivement du matériau silicone.
